# EUROPÄISCHE PATENTANMELDUNG

(11) **EP 4 631 916 A1**
(43) Veröffentlichungstag der Anmeldung: **15.10.2025**
(21) Anmeldenummer: 24169607.9
(22) Anmeldetag: 11.04.2024
(51) Int. Cl.: C02F 1/24, B01F 23/231, B03D 1/14, C02F 1/52, E02B 15/04, E02B 15/06, E02B 15/10, E02B 15/08, B01J 4/02, C02F 103/00

(54) **FLOTATIONSVERFAHREN UND FLOTATIONSANLAGE ZUR REINIGUNG EINES GEWÄSSERS**

(71) Anmelder: MicroBubbles GmbH, 04109 Leipzig (DE)
(72) Erfinder: Damann, Roland, 33106 Paderborn (DE)
(74) Vertreter: Hauck Patent- und Rechtsanwälte PartmbB

(57) **Zusammenfassung**

Verfahren zur Reinigung eines Gewässers mit den folgenden Schritten:
• Anordnen einer Barriere, die einen oberen Rand und einen unteren Rand aufweist, in dem Gewässer, sodass der obere Rand oberhalb der Wasseroberfläche und der untere Rand in einer vorgegebenen Wassertiefe angeordnet ist und die Barriere einen Wasseroberflächenbereich zumindest teilweise umschließt,
• Zuführen von Druckwasser über eine Druckwasserleitung, die ein Entspannungsventil aufweist, in das Gewässer unterhalb des Wasseroberflächenbereichs, sodass sich eine Mikroblasenzone bildet, in der Mikroblasen entstehen und zu dem Wasseroberflächenbereich aufsteigen,
• Entfernen eines Flotats aus dem Wasseroberflächenbereich, und
• Zuführen eines Fäll- und/oder Flockungsmittels in die Mikroblasenzone, sodass sich Mikroblasen an Flocken anlagern, die einen ausgefällten Stoff enthalten, und die Flocken zu dem Wasseroberflächenbereich aufsteigen und einen Teil des Flotats bilden.

## Beschreibung

Die Erfindung betrifft ein Verfahren zur Reinigung eines Gewässers, bei dem eine Barriere in dem zu reinigenden Gewässer so angeordnet wird, dass sie einen Wasseroberflächenbereich zumindest teilweise umschließt. Über eine Druckwasserleitung mit einem Entspannungsventil wird Druckwasser unterhalb des Wassersoberflächenbereichs zugeführt, sodass sich eine Mikroblasenzone bildet, in der Mikroblasen entstehen und zu dem Wasseroberflächenbereich aufsteigen. Dadurch kommt es zur Bildung eines Flotats, das abschließend aus dem Wasseroberflächenbereich entfernt wird. Die Erfindung betrifft auch eine Flotationsanlage, die zur Ausführung des Verfahrens bestimmt ist.

Aus der Druckschrift DE 42 16 096 C2 sind ein Verfahren und eine Vorrichtung zur Verringerung des Phosphatgehalts von Gewässern bekannt geworden. Bei dem Verfahren wird Tiefenwasser angesaugt, in einem Flockungsbecken mit einem Flockungsmittel versetzt und dann in einem Flotationsbecken mit luftgesättigtem Druckwasser behandelt. Dadurch soll das Phosphat ausgefällt und mit dem Flockungsmittel abflotiert werden. Das Flockungsbecken und das Flotationsbecken sind in einen Schwimmkörper integriert. Das Flockungsmittel wird über eine Leitung von einem Ufer des Gewässers aus zugeführt, das Flotat wird über eine weitere Leitung zum Ufer zurückgeführt.

Aus der Druckschrift DE 94 16 833 U1 ist eine Weiterentwicklung der Lösung aus DE 42 15 096 C2 Lösung bekannt geworden, bei der eine Flockungskammer und ein Flotationsbecken nicht in einen Schwimmkörper integriert, sondern am Rand des Gewässers in einem Standardcontainer untergebracht sind. Das zu behandelnde Wasser wird über eine Tiefenwasserleitung angesaugt, das Klarwasser über eine Rückführleitung in das Gewässer zurückgeführt. Die Enden der Tiefenwasser- und der Rückführleitung werden mit jeweils einem Schwimmkörper in der erforderlichen Wassertiefe angeordnet.

Aus der Druckschrift EP 3 647 272 B1 ist eine schwimmende Flotationsanlage mit den Merkmalen des Oberbegriffs des Anspruchs 1 bekannt geworden.

Davon ausgehend ist es die Aufgabe der Erfindung, die bekannte Flotationsanlage und das damit ausgeführte Verfahren zur Reinigung eines Gewässers dahingehend zu verbessern, dass insbesondere in dem Gewässer gelöste Verunreinigungen besser entfernt werden können.

Diese Aufgabe wird gelöst durch das Verfahren zur Reinigung eines Gewässers mit den Merkmalen des Anspruchs 1. Das Verfahren was die folgenden Schritte auf:
- Anordnen einer Barriere, die einen oberen Rand und einen unteren Rand aufweist, in dem Gewässer, sodass der obere Rand oberhalb der Wasseroberfläche und der untere Rand in einer vorgegebenen Wassertiefe angeordnet ist und die Barriere einen Wasseroberflächenbereich zumindest teilweise umschließt,
- Zuführen von Druckwasser über eine Druckwasserleitung, die ein Entspannungsventil aufweist, in das Gewässer unterhalb des Wasseroberflächenbereichs, sodass sich eine Mikroblasenzone bildet, in der Mikroblasen entstehen und zu dem Wasseroberflächenbereich aufsteigen,
- Entfernen eines Flotats aus dem Wasseroberflächenbereich, und
- Zuführen eines Fäll- und/oder Flockungsmittels in die Mikroblasenzone, sodass sich Mikroblasen an Flocken anlagern, die einen ausgefällten Stoff enthalten, und die Flocken zu dem Wasseroberflächenbereich aufsteigen und einen Teil des Flotats bilden.

Die Barriere sorgt dafür, dass ein bestimmter Wasseroberflächenbereich von dem umgebenden Gewässer abgetrennt wird. Hierzu hat die Barriere einen oberen und einen unteren Rand. Der untere Rand befindet sich in einer vorgegebenen Wassertiefe.

Die vorgegebene Wassertiefe kann beispielsweise im Bereich von 5 cm bis 2 m liegen. Der obere Rand ist oberhalb der Wasseroberfläche angeordnet, beispielsweise in einer Höhe im Bereich von 5 cm bis 50 cm oberhalb der Wasseroberfläche. Die Höhe des oberen Rands und die Tiefe des unteren Rands können so gewählt werden, dass innerhalb der Barriere entstehendes Flotat weder unterhalb noch oberhalb der Barriere die Barriere überwinden und in das umgebende Gewässer gelangen kann. Bei der Bemessung der Höhe und Tiefe der Barriere kann eine Dicke der zu erwartenden Flotatschicht berücksichtigt werden. Ebenfalls berücksichtigt werden können die jeweiligen Einsatzbedingungen: Bei regelmäßig auftretendem, starkem Wind, Wellengang oder Strömung in dem Gewässer kann eine relativ hohe und/oder bis in relativ große Wassertiefe hinabreichende Barriere wichtig sein.

Insgesamt umschließt die Barriere den Wasseroberflächenbereich zumindest teilweise. Das bedeutet, dass die Barriere nicht zu allen Seiten hin vollständig geschlossen sein muss. Öffnungen bzw. Lücken in der Barriere sind unproblematisch, solange das Flotat aus dem Wasseroberflächenbereich entfernt werden kann, bevor es in relevanter Menge durch die Lücken aus dem abgegrenzten Wasseroberflächenbereich entweicht. Gibt es in dem Gewässer eine Strömung oder eine vorherrschende Windrichtung, kann es beispielsweise unproblematisch sein, wenn die Barriere an einer stromaufwärts gelegenen bzw. windzugewandten Seite eine Lücke aufweist, weil die Strömung bzw. der Wind ein Entweichen des Flotats an dieser Stelle verhindern. Gleichzeitig kann die Lücke hilfreich sein, um das Flotat gezielt zu entfernen.

Das bei dem Verfahren zugeführt Druckwasser kann insbesondere in einem Reaktorbehälter hergestellt werden, dem Wasser, insbesondere dem Gewässer entnommenes Wasser, unter erhöhtem Druck mit einem Gas, insbesondere mit Luft, gemischt wird. Dieser Mischungsvorgang wird bevorzugt solange ausgeführt, bis eine Sättigungskonzentration erreicht oder fast erreicht ist. Das weitgehend gesättigte Druckwasser wird über eine Druckwasserleitung in das Gewässer zugeführt und strömt durch ein Entspannungsventil, das in der Druckwasserleitung, insbesondere an einem Ende der Druckwasserleitung, angeordnet ist. Die hierdurch bewirkte Druckentspannung führt zur Bildung zahlreicher Mikroblasen. Diese weisen bevorzugt ein Größenspektrum im Bereich von beispielsweise 10 µm bis 100 µm Durchmesser auf. Die Mikroblasen verteilen sich in einer Umgebung des Entspannungsventils und steigen von dort aufgrund ihres Auftriebs langsam zu dem Wasseroberflächenbereich auf.

Bei der Erfindung wird in die so ausgebildete Mikroblasenzone ein Fäll- und/oder Flockungsmittel zugeführt. Das Fäll- und/oder Flockungsmittel bindet insbesondere in dem Gewässer gelöste Verunreinigungen und/oder fällt diese Stoffe aus. Dadurch bilden sich kleinere und größere Flocken, an die sich Mikroblasen anlagern. Diese Flocken steigen gemeinsam mit den angelagerten Mikroblasen zu dem Wasseroberflächenbereich auf und bilden einen Teil des Flotats.

Nach dem Entfernen des Flotats ist das Gewässer im Bereich der Mikroblasenzone im Wesentlichen von sämtlichen Verunreinigungen gereinigt. Dies gilt für in dem Gewässer enthaltene Partikel wie beispielsweise Mikroplastik, die auch ohne Verwendung eines Fäll- und/oder Flockungsmittels durch die Mikroblasen abgeschieden werden können. Zusätzlich entfernt werden diejenigen Verunreinigungen, die erst durch den Zusatz des Fäll- und/oder Flockungsmittels ausgefällt und durch Flockenbildung abscheidefähig gemacht werden. Aufgrund der Eigenschaften des eingesetzten Fäll- und/oder Flockungsmittels bilden sich auch in Abwesenheit von auszufällenden Stoffen Flocken, die im Wesentlichen aus dem Fäll- und/oder Flockungsmittel selbst bestehen. Auch diese Flocken werden durch die Mikroblasen zuverlässig und weitgehend vollständig aus dem Gewässer entfernt.

Zu dieser weitgehend vollständigen Abscheidung des zugeführten Fäll- und/oder Flockungsmittels kommt es bei der Erfindung deshalb, weil das Fäll- und/oder Flockungsmittel gezielt in die Mikroblasenzone zugeführt wird. Es wird daher in jedem Fall weitgehend vollständig abgeschieden. Außerhalb der Mikroblasenzone wird kein Fäll- und/oder Flockungsmittel eingebracht und bleibt auch keines zurück. Das Verfahren kann daher auch in sensiblen Gewässern eingesetzt werden und in Verbindung mit ökologisch grundsätzlich nicht unbedenklichen Fäll- und/oder Flockungsmitteln.

In einer Ausgestaltung wird das Fäll- und/oder Flockungsmittel in einen Abschnitt der Druckwasserleitung eingegeben, der stromabwärts des Entspannungsventils angeordnet ist. In diesem Fall befindet sich das Entspannungsventil bzw. ein Spalt des Entspannungsventils nicht unmittelbar am Ende der Druckwasserleitung. Stattdessen strömt das entspannte Druckwasser gemeinsam mit dem zugeführten Fäll- und/oder Flockungsmittel durch einen stromabwärts des Entspannungsventils angeordneten Abschnitt der Druckwasserleitung bis zu einer Austrittsöffnung der Druckwasserleitung. Es kommt bereits vor dem Eingeben des Druckwassers in das freie Gewässer, noch innerhalb der Druckwasserleitung, zu einer Durchmischung des zugeführten Druckwassers und des Fäll- und/oder Flockungsmittels. Mindestens ein Teil der Mikroblasen bildet sich bereits innerhalb der Druckwasserleitung, stromabwärts des Entspannungsventils. Dadurch wird erreicht, dass das Fäll- und/oder Flockungsmittel immer innerhalb der Mikroblasenzone freigesetzt wird, beispielsweise auch im Falle einer Strömung des Gewässers. Dadurch wird vermieden, dass Fäll- und/oder Flockungsmittel in dem Gewässer verbleibt.

In einer Ausgestaltung wird das Fäll- und/oder Flockungsmittel einem Vorratsbehälter entnommen und über eine Leitung mit einem Injektor zugeführt. Eine Austrittsöffnung des Injektors ist innerhalb der Mikroblasenzone angeordnet, entweder im freien Gewässer, unterhalb des von der Barriere zumindest teilweise umschlossenen Wasseroberflächenbereichs, oder in einem Abschnitt der Druckwasserleitung.

In einer Ausgestaltung wird das Fäll- und/oder Flockungsmittel vor dem Zuführen in die Mikroblasenzone mit Wasser aus dem Gewässer vermischt, insbesondere in einem Rohrflockulator. Die Ausfällprozesse sowie die Flockenbildung können dann schon stattfinden oder zumindest beginnen, bevor das Fäll- und/oder Flockungsmittel in die Mikroblasenzone gelangt. Dies kann eine vollständige Abscheidung des Fäll- und/oder Flockungsmittels begünstigen, ebenso ein wirksames Ausfällen der abzuscheidenden Stoffe. Das Vermischen des Fäll- und/oder Flockungsmittels mit Wasser aus dem Gewässer erfolgt in einem vom Gewässer getrennten Bereich, insbesondere in einem Mischungsbehälter, in dem die Flockenbildung stattfindet (Flockulator). Weiterhin wird sämtliches zugeführtes Fäll- und/oder Flockungsmittel in die Mikroblasenzone geleitet und gelangt nicht außerhalb davon in das Gewässer.

In einer Ausgestaltung wird das Wasser, mit dem das Fäll- und/oder Flockungsmittel vor dem Zuführen in die Mikroblasenzone vermischt wird, mit einer Ansaugleitung aus einer vorgegebenen Wassertiefe angesaugt. Diese Variante ist immer dann sinnvoll, wenn die mit dem Fäll- und/oder Flockungsmittel auszufällenden Verunreinigungen in einer bestimmten Wassertiefe mit erhöhter Konzentration vorliegen. Dies gilt beispielsweise für Phosphatverbindungen, die in den meisten natürlichen Gewässern unmittelbar oberhalb des Gewässergrunds die höchste Konzentration aufweisen. Aus diesem Bereich wird das Wasser gezielt angesaugt und mit dem Fäll- und/oder Flockungsmittel vermischt, bevor diese Mischung in die Mikroblasenzone zugeführt wird. Auf diese Weise gelingt eine besonders effiziente Abscheidung der Schadstoffe aus der vorgegebenen Wassertiefe.

In einer Ausgestaltung weist das Fäll- und/oder Flockungsmittel Polyaluminiumchlorid auf. Dieser Stoff ist insbesondere zum Ausfällen von Phosphatverbindungen gut geeignet.

Die oben genannte Aufgabe wird ebenfalls gelöst durch die Flotationsanlage mit den Merkmalen des Anspruchs 7. Die Flotationsanlage dient zur Reinigung eines Gewässers und weist die folgenden Merkmale auf:
- eine Einrichtung zum Erzeugen von Druckwasser,
- eine Druckwasserleitung, die mit der Einrichtung zum Erzeugen von Druckwasser verbunden ist und die ein Entspannungsventil und eine Austrittsöffnung aufweist,
- eine Barriere, die einen oberen Rand und einen unteren Rand aufweist,
- einen Auftriebskörper, der so dimensioniert ist, dass die Flotationsanlage an der Wasseroberfläche des Gewässers schwimmend angeordnet werden kann, sodass der obere Rand oberhalb der Wasseroberfläche und der untere Rand in einer vorgegebenen Wassertiefe angeordnet ist und die Barriere einen Wasseroberflächenbereich zumindest teilweise umschließt,
- wobei die Austrittsöffnung bei schwimmender Flotationsanlage unterhalb des Wasseroberflächenbereichs angeordnet ist,
- eine Einrichtung zum Entfernen eines Flotats aus dem Wasseroberflächenbereich, und
- eine Steuerung, die mit der Einrichtung zum Erzeugen von Druckwasser verbunden und dazu ausgebildet ist, das Abgeben von Druckwasser durch die Druckwasserleitung so zu steuern, dass sich eine Mikroblasenzone bildet, in der Mikroblasen entstehen und zu dem Wasseroberflächenbereich aufsteigen, wobei
- die Flotationsanlage eine Einrichtung zum Zuführen eines Fäll- und/oder Flockungsmittels in die Mikroblasenzone aufweist.

Diese Flotationsanlage ist insbesondere zur Ausführung des Verfahrens nach einem der Ansprüche 1 bis 6 bestimmt. Zur Erläuterung der Merkmale und Vorteile der Flotationsanlage wird auf die vorstehenden Erläuterungen des Verfahrens verwiesen, die entsprechend gelten. Zusätzlich zu den bereits angesprochenen Merkmalen weist die Flotationsanlage einen Auftriebskörper auf, der die schwimmende Anordnung der Flotationsanlage ermöglicht. Insbesondere hält der Auftriebskörper die Barriere in der richtigen Höhe an der Wasseroberfläche.

Bei schwimmender Flotationsanlage ist die Austrittsöffnung der Druckwasserleitung unterhalb des von der Barriere zumindest teilweise umschlossenen Wasseroberflächenbereichs angeordnet. Sie befindet sich insbesondere in einer vorgegebenen Wassertiefe. Hierzu kann die Flotationsanlage eine Tragstruktur aufweisen, die mit dem Auftriebskörper, der Barriere und der Druckwasserleitung verbunden ist. Die Anordnung der Austrittsöffnung "unterhalb" des Wasseroberflächenbereichs bedeutet einerseits, dass sich die Austrittsöffnung in einer bestimmten Wassertiefe, d. h. in einem dieser Wassertiefe entsprechenden Abstand von der Wasseroberfläche befindet. Ebenfalls gemeint ist, dass die Austrittsöffnung auch in seitlicher Richtung unterhalb des Wasseroberflächenbereichs liegt, sodass aufgrund des Auftriebs aufsteigende Mikroblasen, die sich stromabwärts der Austrittsöffnung im Wasser befinden, zu dem abgegrenzten Wasseroberflächenbereich aufsteigen.

Außerdem hat die Flotationsanlage eine Steuerung, die das Abgeben von Druckwasser durch die Druckwasserleitung steuert. Hierzu kann beispielsweise eine Pumpe, mit der Wasser in einen Mischungsbehälter eingeleitet wird, gesteuert werden, ebenso die Gas- bzw. Luftzufuhr in den Mischungsbehälter. Die Steuerungsfunktion der Steuerung kann sich auch auf eine Einstellung des Entspannungsventils erstrecken.

Die Einrichtung zum Entfernen eines Flotats aus dem Wasseroberflächenbereich kann eine Räumeinrichtung sein, beispielsweise mit einem innerhalb des von der Barriere abgegrenzten Wasseroberflächenbereichs umlaufenden Räumers und/oder mit einer Absaugeinrichtung für das Flotat.

In einer Ausgestaltung weist die Flotationsanlage einen Vorratsbehälter auf, der über eine Leitung mit einem Injektor verbunden ist, mit dem das Fäll- und/oder Flockungsmittel in die Mikroblasenzone zugeführt wird. Diese Elemente wurden bereits im Zusammenhang mit dem Verfahren erläutert.

In einer Ausgestaltung ist eine Öffnung des Injektors in einem Abschnitt der Druckwasserleitung stromabwärts des Entspannungsventils angeordnet. Dadurch kann das Fäll- und/oder Flockungsmittel (unmittelbar oder nach vorheriger Durchmischung mit dem zu behandelndem Wasser) unter kontrollierten Bedingungen in die Mikroblasenzone zugeführt werden, wie oben im Zusammenhang mit dem stromabwärts des Entspannungsventils angeordneten Abschnitt der Druckwasserleitung bereits erläutert.

In einer Ausgestaltung weist die Flotationsanlage einen Flockungsreaktor auf, der dazu ausgebildet ist, dass Fäll- und/oder Flockungsmittel vor dem Zuführen in die Mikroblasenzone mit Wasser aus dem Gewässer zu vermischen. Der Flockungsreaktor, oben auch als Flockulator oder Rohrflockulator bezeichnet, ist ein Mischungsbehälter, in dem die Ausfällreaktion und/oder die Flockenbildung stattfinden, zumindest beginnen.

In einer Ausgestaltung weist die Flotationsanlage eine Ansaugleitung auf, die in einer vorgegebenen Wassertiefe angeordnet ist und in den Flockungsreaktor mündet. Diesbezüglich wird auf die vorstehenden Erläuterungen des Verfahrens verwiesen.

In einer Ausgestaltung ist der Flockungsreaktor ein Rohrflockulator. Der Rohrflockulator weist einen rohrförmigen, d. h. besonders langgestreckten Mischungsbehälter auf, sodass das hindurchströmende Wasser über einen relativ langen Zeitraum mit dem Fäll -und/oder Flockungsmittel wechselwirken kann.

In einer Ausgestaltung weist der Rohrflockulator ein ring- oder teilringförmiges Rohr auf, das bei schwimmender Flotationsanlage waagerecht angeordnet ist und/oder das um die Flotationsanlage umläuft. Das Rohr dann insbesondere etwa auf Höhe der Wasseroberfläche oder knapp darunter angeordnet sein. In dieser Anordnung kann das Rohr insbesondere durch den Auftriebskörper gehalten werden. Insgesamt ergibt sich eine besonders kompakte Anordnung der Flotationsanlage, und das zu reinigende Wasser, das bereits mit dem Fäll- und/oder Flockungsmittel behandelt ist, kann auf kurzem Weg in die Mikroblasenzone eingebracht werden.

Nachfolgend wird die Erfindung anhand von in Figuren dargestellten Ausführungsbeispielen näher erläutert. Es zeigen:
- Fig. 1: eine Flotationsanlage im Betrieb in einer schematischen Darstellung,
- Fig. 2: eine weitere Flotationsanlage im Betrieb, ebenfalls in einer schematischen Darstellung.

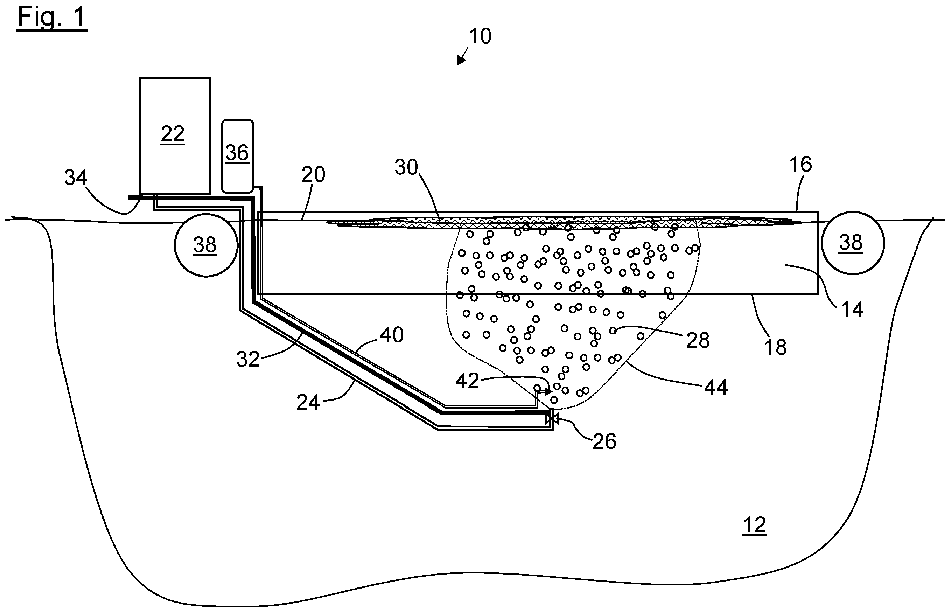

Die Flotationsanlage 10 aus Figur 1 ist mit Hilfe von Auftriebskörpern 38 an der Oberfläche eines Gewässers 12 schwimmend angeordnet. Das Gewässer 12 ist im Beispiel ein natürlicher See, es könnte sich aber ebenso gut um Regenrückhaltebecken oder ein anderes natürliches oder künstlich angelegtes Gewässer handeln.

Die Flotationsanlage 10 hat eine Barriere 14, die eine etwa senkrecht angeordnete Wand aufweist, die einen Wasseroberflächenbereich 20 innerhalb der Barriere 14 von dem umgebenden Gewässer 12 abgrenzt. Die Barriere 14 hat einen oberen Rand 16, der etwa 20 cm oberhalb der Wasseroberfläche angeordnet ist, und einen unteren Rand 18, der sich in einer Wassertiefe von etwa 1 m befindet. Fig. 1 zeigt die Flotationsanlage 10 in einer seitlichen Ansicht. In einer Ansicht von oben wäre erkennbar, dass die Barriere 14 etwa kreisförmig ausgebildet ist und den Wasseroberflächenbereich 20 im Wesentlichen zu allen Seiten hin umschließt.

Die Flotationsanlage 10 hat eine Einrichtung 22 zum Erzeugen von Druckwasser, die mit einer Druckwasserleitung 24 verbunden ist. In der Einrichtung 22 zum Erzeugen von Druckwasser wird dem Gewässer 12 entnommenes Wasser unter erhöhtem Druck mit Luft gemischt, bis das Wasser im Wesentlichen mit dem darin gelösten Gas gesättigt ist. Das Druckwasser gelangt durch die Druckwasserleitung 24 bis zu einem Entspannungsventil 26, das nahe einer Austrittsöffnung der Druckwasserleitung 24 angeordnet ist bzw. das diese Austrittsöffnung bildet. Während des Durchströmens des Entspannungsventils 26 kommt es zu einer Druckentspannung und das Wasser ist mit dem zuvor gelösten Gas übersättigt. Dies führt zur Entstehung zahlreicher Mikroblasen 28. Die Mikroblasen 28 strömen vom Ort ihrer Entstehung durch Ihren Auftrieb langsam zur Oberfläche des Gewässers 12, und zwar wegen der Anordnung der Austrittsöffnung der Druckwasserleitung 24 unterhalb des Wasseroberflächenbereichs 20 innerhalb dieses Bereichs. Dort bildet sich ein Flotat 30.

Die Flotationsanlage 10 weist eine nur schematisch angedeutete Tragstruktur 32 mit einer Plattform 34 auf, auf der die Einrichtung 22 zum Erzeugen von Druckwasser sowie ein Vorratsbehälter 36 für ein Fäll -und/oder Flockungsmittel angeordnet sind. Die Barriere 14 und die Auftriebskörper 38 sind ebenso wie die Druckwasserleitung 24 mit der Tragstruktur 32 verbunden, was in der Fig. 1 nicht im Einzelnen dargestellt ist.

Vom Vorratsbehälter 36 führte eine Leitung 40 zu einem Injektor 42, dessen Öffnung unmittelbar oberhalb der Austrittsöffnung der Druckwasserleitung 24 angeordnet ist. Das im Vorratsbehälter 36 befindliche Fäll- und/oder Flockungsmittel kann über die Leitung 40 und den Injektor 42 direkt in das freie Gewässer eingegeben werden, und zwar in die Mikroblasenzone. Dadurch werden dort in dem Gewässer 12 gelöste Schadstoffe ausgefällt und in sich bildenden Flocken gebunden. An diese Flocken lagern sich Mikroblasen 28 an, welche die Flocken nach oben in den Wasseroberflächenbereich 20 mitnehmen, wo die Flocken einen Teil des Flotats 30 bilden.

Nach dem (nicht dargestellten) Entfernen des Flotats 30 aus dem Wasseroberflächenbereich 20 ist das in das Gewässer 12 eingebrachte Fäll- und/oder Flockungsmittel dem Gewässer 12 vollständig wieder entnommen, einschließlich der gebundenen Verunreinigungen.

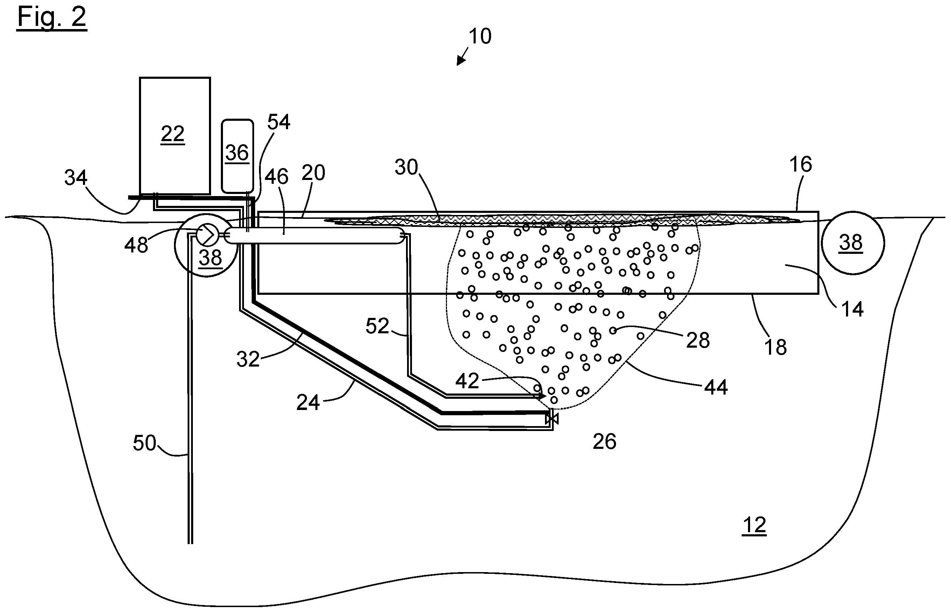

Figur 2 zeigt eine andere Flotationsanlage 10, die hinsichtlich der Barriere 14, der Auftriebskörper 38, der Tragstruktur 32 sowie der Einrichtung 22 zum Erzeugen von Druckwasser nebst Druckwasserleitung 24 und Entspannungsventil 26 ebenso ausgebildet ist, wie zur Fig. 1 beschrieben. Die Zufuhr des Fäll- und/oder Flockungsmittels erfolgt ebenfalls aus einem Vorratsbehälter 36, jedoch nicht unmittelbar aus dem Vorratsbehälter 36 in die Mikroblasenzone 44. Stattdessen gibt es zusätzlich einen Rohrflockulator 46, der außerhalb der Barriere 14 ein Stück weit um die Mikroflotationsanlage 10 umlaufend und nahe der Wasseroberfläche angeordnet ist. Mithilfe einer Ansaugleitung 50, in die eine Förderpumpe 48 integriert ist, wird Wasser aus dem Gewässer 12 aus einer vorgegebenen Wassertiefe angesaugt und in ein erstes Ende des Rohrflockulators 46 gepumpt. Etwa an derselben Position des Rohrflockulators 46 wird das Fäll -und/oder Flockungsmittel aus dem Vorratsbehälter 36 über eine Dosierleitung 54 eingegeben.

Während das Wasser und das Fäll -und oder Flockungsmittel durch den Rohrflockulator 46 strömen, kommt es zu einer intensiven Durchmischung und es werden bereits in dem angesaugten Wasser enthaltene Schadstoffe ausgefällt sowie entsprechende Flocken gebildet. Am anderen Ende des Rohrflockulators 46 befindet sich eine weitere Leitung 52, die zu einem Injektor 42 führt. Über diesen Injektor 42 wird das dem Rohrflockulator 46 entnommene Gemisch in die Mikroblasenzone 44 eingegeben.

### Liste der Bezugszeichen

- 10: Flotationsanlage
- 12: Gewässer
- 14: Barriere
- 16: oberer Rand
- 18: unterer Rand
- 20: Wasseroberflächenbereich
- 22: Einrichtung zum Erzeugen von Druckwasser
- 24: Druckwasserleitung
- 26: Entspannungsventil
- 28: Mikroblase
- 30: Flotat
- 32: Tragstruktur
- 34: Plattform
- 36: Vorratsbehälter
- 38: Auftriebskörper
- 40: Leitung
- 42: Injektor
- 44: Mikroblasenzone
- 46: Rohrflockulator
- 48: Förderpumpe
- 50: Ansaugleitung
- 52: weitere Leitung
- 54: Dosierleitung

## Patentansprüche

1. Verfahren zur Reinigung eines Gewässers (12) mit den folgenden Schritten:
• Anordnen einer Barriere (14), die einen oberen Rand (16) und einen unteren Rand (18) aufweist, in dem Gewässer (12), sodass der obere Rand (16) oberhalb der Wasseroberfläche und der untere Rand (18) in einer vorgegebenen Wassertiefe angeordnet ist und die Barriere (14) einen Wasseroberflächenbereich (20) zumindest teilweise umschließt,
• Zuführen von Druckwasser über eine Druckwasserleitung (24), die ein Entspannungsventil (26) aufweist, in das Gewässer (12) unterhalb des Wasseroberflächenbereichs (20), sodass sich eine Mikroblasenzone (44) bildet, in der Mikroblasen (28) entstehen und zu dem Wasseroberflächenbereich (20) aufsteigen,
• Entfernen eines Flotats (30) aus dem Wasseroberflächenbereich (20), **gekennzeichnet durch** den weiteren Schritt
• Zuführen eines Fäll- und/oder Flockungsmittels in die Mikroblasenzone (44), sodass sich Mikroblasen (28) an Flocken anlagern, die einen ausgefällten Stoff enthalten, und die Flocken zu dem Wasseroberflächenbereich (20) aufsteigen und einen Teil des Flotats (30) bilden.

2. Verfahren nach Anspruch 1, **dadurch gekennzeichnet, dass** das Fäll- und/oder Flockungsmittel in einen Abschnitt der Druckwasserleitung (24) eingegeben wird, der stromabwärts des Entspannungsventils (26) angeordnet ist.

3. Verfahren nach Anspruch 1 oder 2, **dadurch gekennzeichnet, dass** das Fäll- und/oder Flockungsmittel einem Vorratsbehälter (36) entnommen und über eine Leitung (40) mit einem Injektor zugeführt wird.

4. Verfahren nach einem der Ansprüche 1 bis 3, **dadurch gekennzeichnet, dass** das Fäll- und/oder Flockungsmittel vor dem Zuführen in die Mikroblasenzone (44) mit Wasser aus dem Gewässer (12) vermischt wird, insbesondere in einem Rohrflockulator (46).

5. Verfahren nach Anspruch 4, **dadurch gekennzeichnet, dass** das Wasser, mit dem das Fäll- und/oder Flockungsmittel vor dem Zuführen in die Mikroblasenzone (44) vermischt wird, mit einer Ansaugleitung (50) aus einer vorgegebenen Wassertiefe angesaugt wird.

6. Verfahren nach einem der Ansprüche 1 bis 5, **dadurch gekennzeichnet, dass** das Fäll- und/oder Flockungsmittel Polyaluminiumchlorid aufweist.

7. Flotationsanlage (10) zur Reinigung eines Gewässers (12) mit
• einer Einrichtung (22) zum Erzeugen von Druckwasser,
• einer Druckwasserleitung (24), die mit der Einrichtung (22) zum Erzeugen von Druckwasser verbunden ist und die ein Entspannungsventil (26) und eine Austrittsöffnung aufweist,
• einer Barriere (14), die einen oberen Rand (16) und einen unteren Rand (18) aufweist,
• einem Auftriebskörper (38), der so dimensioniert ist, dass die Flotationsanlage (10) an der Wasseroberfläche des Gewässers (12) schwimmend angeordnet werden kann, sodass der obere Rand (16) oberhalb der Wasseroberfläche und der untere Rand (18) in einer vorgegebenen Wassertiefe angeordnet ist und die Barriere (14) einen Wasseroberflächenbereich (20) zumindest teilweise umschließt,
• wobei die Austrittsöffnung bei schwimmender Flotationsanlage (10) unterhalb des Wasseroberflächenbereichs (20) angeordnet ist,
• einer Einrichtung zum Entfernen eines Flotats (30) aus dem Wasseroberflächenbereich (20), und
• einer Steuerung, die mit der Einrichtung (22) zum Erzeugen von Druckwasser verbunden und dazu ausgebildet ist, das Abgeben von Druckwasser durch die Druckwasserleitung (24) so zu steuern, dass sich eine Mikroblasenzone (44) bildet, in der Mikroblasen (28) entstehen und zu dem Wasseroberflächenbereich (20) aufsteigen, **gekennzeichnet durch**
• eine Einrichtung zum Zuführen eines Fäll- und/oder Flockungsmittels in die Mikroblasenzone (44).

8. Flotationsanlage (10) nach Anspruch 7, **dadurch gekennzeichnet, dass** die Flotationsanlage (10) einen Vorratsbehälter (36) aufweist, der über eine Leitung (40) mit einem Injektor (42) verbunden ist, mit dem das Fäll- und/oder Flockungsmittel in die Mikroblasenzone (44) zugeführt wird.

9. Flotationsanlage (10) nach Anspruch oder 8, **dadurch gekennzeichnet, dass** eine Öffnung des Injektors (42) in einem Abschnitt der Druckwasserleitung (24) stromabwärts des Entspannungsventils (26) angeordnet ist.

10. Flotationsanlage (10) nach Anspruch 7 oder 8, **dadurch gekennzeichnet, dass** die Flotationsanlage (10) einen Flockungsreaktor aufweist, der dazu ausgebildet ist, das Fäll- und/oder Flockungsmittel vor dem Zuführen in die Mikroblasenzone (44) mit Wasser aus dem Gewässer (12) zu vermischen.

11. Flotationsanlage (10) nach Anspruch 10, **dadurch gekennzeichnet, dass** die Flotationsanlage (10) eine Ansaugleitung (50) aufweist, die in einer vorgegebenen Wassertiefe angeordnet ist und in den Flockungsreaktor mündet.

12. Flotationsanlage (10) nach Anspruch 11, **dadurch gekennzeichnet, dass** der Flockungsreaktor ein Rohrflockulator (46) ist.

13. Flotationsanlage (10) nach Anspruch 12, **dadurch gekennzeichnet, dass** der Rohrflockulator (46) ein ring- oder teilringförmiges Rohr aufweist, das bei schwimmender Flotationsanlage (10) waagerecht angeordnet ist und/oder das um die Flotationsanlage (10) umläuft.
